# EUROPEAN PATENT SPECIFICATION

(11) **EP 0 306 352 B1**
(45) Date of publication and mention of the grant of the patent: **25.08.1993**
(21) Application number: 88308215.8
(22) Date of filing: 05.09.1988
(51) Int. Cl.: F16J 15/54, F16C 33/74

(54) **Bearing seal assemblies**
Dichtungsvorrichtung für Lager
Dispositif de joint pour palier

(30) Priority: 03.09.1987 US 92657; 06.11.1987 US 117802; 09.10.1987 US 106445; 25.08.1988 US 235438
(43) Date of publication of application: 08.03.1989
(73) Proprietor: QUADION CORPORATION, St. Louis Park Minnesota 55416 (US)
(72) Inventor: Boyd, Richard Milton, St Louis Park, Minnesota 55416 (US)
(74) Representative: Valentine, Francis Anthony Brinsley

(56) References cited:
- CH-A- 354 633
- FR-A- 1 214 899
- FR-A- 1 404 097
- FR-A- 2 082 214
- GB-A- 2 119 476
- US-A- 2 873 132
- US-A- 2 877 070
- US-A- 2 909 398
- US-A- 3 418 001

## Description

This invention relates to bearing seal assemblies.

High-speed, rotating metal parts have created lubrication, and consequently wear, problems for many years for the reason that they must be housed in metal bearings having a different coefficient of expansion. As a direct result thereof, the high speeds of rotation generate heat despite adequate lubrication between the parts, with the result that the opposed metal parts expand at a different rate, which permits the lubrication to escape from the gear box in which it is contained. Once the lubrication escapes, substantial wear is experienced and the installation is doomed if the movement is continued. Similar problems are experienced with respect to installations utilizing high speed reciprocating movements.

Seals located between such metal parts in the form of bearings, for accommodating such high speed relative movement over prolonged periods, can be advantageously formed of recently developed materials which have a high degree of inherent lubrication. Thus, a bearing product sold under the trademark VESPEL, although very costly and one which must be machined, will function as a seal under such conditions, provided it is urged gently and firmly but continuously against the sealing surface without excessive pressure, the latter being a cause of undue wear. However, experience has shown that no construction heretofore conceived or known would adequately furnish such a seal because no way was known for providing such gentle pressure continuously and substantially uniformly between metal parts having standard variations in dimensions, and over all of the temperature ranges generated during long periods of high speed movements. No way was known for automatically adjusting such pressure to compensate for dimensional changes over the gamut of temperature variations created within such parts.

US Patent Serial No. 2,909,398 describes a seal assembly for providing a seal between a bore and a piston moveable therein. The seal assembly comprises an annular seal element of a plastics material and an elastomeric back-up ring located in a circumferential groove around the outer surface of the piston. The back-up ring seats at the base of the groove and abuts at its radially outer surface the inner surface of the seal element. The combined dimensions in the radial direction of the back-up ring in its free form and of the seal element are greater than the corresponding dimension of the groove so that, before the piston is inserted into the bore, the seal element stands proud of the outer surface of the piston. When the piston is in place in the bore therefore the elastomeric back-up ring is compressed and urges the seal element in the working direction of the seal assembly towards the surface of the bore to form a seal.

The seal element is of rectangular cross section and the back-up ring is of generally X-shaped cross section with, in section, convexly curved corner surfaces linking concavely curved pairs of radially and axially opposed surfaces. The back-up ring is of the conventional "Quad" ring type.

The present invention is defined in the appendant claims.

The invention will now be described in more detail by way of examples with reference to the drawings, in which:
Fig. 1 is a fragmentary vertical sectional view of a brass bearing with a rapidly rotating steel shaft mounted therein and shown in elevation, with a bearing-seal assembly perfecting a seal therebetween at its outer diameter;
Fig. 2 is a similar fragmentary vertical sectional view of a brass bearing with a rapidly rotating steel shaft mounted therein and shown in elevation, with a bearing-seal assembly forming a seal therebetween at its inner diameter;
Fig. 3 is a side elevational view of an annular seal element;
Fig. 4 is a top plan view of the seal element shown in Fig. 3;
Fig. 5 is a vertical sectional view, taken along line 5-5 of Fig. 3;
Fig. 6 is a side elevational view of an elastomeric back-up ring such as is shown in Figs. 1-2 behind the annular seal element;
Fig. 7 is a vertical sectional view taken along line 7-7 of Fig. 6;
Fig. 8 is an enlarged vertical sectional view of the ring shown in Figs. 6-7;
Fig. 9 is a perspective view of a molded sectional seal element where the two sections are substantially identical.
Fig. 10 is a fragmentary vertical sectional view of a bearing seal assembly with an L- shaped seal element wherein the seal is perfected on the inner diameter of the bearing member;
Fig. 11 is a vertical sectional view on an enlarged scale of that L-shaped seal element, taken along line 11-11 of Fig. 12;
Fig. 12 is an end elevational view of that seal element;
Fig. 13 is a top plan view thereof;
Fig. 14 is a vertical sectional view of an elastomeric back-up ring of modified cross-section which may be used with a similar but slightly different bearing member;
Fig. 15 is a fragmentary vertical sectional view of a different but similar bearing assembly wherein the, seal is perfected on the outer diameter of the seal element;
Fig. 16 is a vertical sectional view on an enlarged scale of the seal element shown in Fig. 15;
Fig. 17 is an end elevational view of the seal element shown in Fig. 16;
Fig. 18 is a top plan view of the seal element shown in Fig. 16 and 17;
Fig. 19 is a fragmentary vertical sectional view of a continuous bearing-seal assembly including a two-part shaft mounted for high speed movement relative to its housing, with the shaft shown in elevation and with a portion broken away;
Fig. 20 is a fragmentary vertical sectional view of a two part housing having one of my continuous bearing-seal assemblies mounted therein, with the shaft shown therein in elevation;
Fig. 21 is a view similar to that shown in Fig. 19, except that the seal element is shown without a tang;
Fig. 22 is a view similar to that shown in Fig. 20, except that the seal element is shown without a tang;
Fig. 23 is a view similar to that shown in Fig. 19, except that the seal element is L-shaped in cross-section;
Fig. 24 is a view similar to that shown in Fig. 20 except that the seal element is L-shaped in cross-section;
Fig. 25 is a vertical sectional view of a single-part housing with a single-part shaft mounted therein for high speed relative movement, the seal element being split and without a tang and the bearing-seal assembly being mounted within the shaft;
Fig. 26 is a vertical sectional view of a single-part housing with a single-part shaft mounted therein for high speed relative movement, the seal element being split and without a tang and the bearing-seal assembly being mounted within the housing;
Fig. 27 is a plan view of the continuous seal element with a tang, as shown in Fig. 19;
Fig. 28 is a transverse vertical sectional view taken through the seal element of Fig. 27;
Fig. 29 is a plan view of the continuous seal element without a tang, as shown in Fig. 21;
Fig. 30 is a transverse vertical sectional view taken through the seal element of Fig. 29;
Fig. 31 is a plan view of the split ring seal element without a tang, as shown in Figs. 25 and 26;
Fig. 32 is a transverse sectional view of the seal element of Fig. 31;
Fig. 33 is a fragmentary vertical sectional view of a piston assembly with a cylinder, with a piston therein having a split-ring seal element; and
Fig. 34 is a fragmentary vertical sectional view of a bearing-seal assembly within a sectional housing surrounding a shaft mounted for relative high speed movement, the assembly utilizing an O-ring behind the seal element.

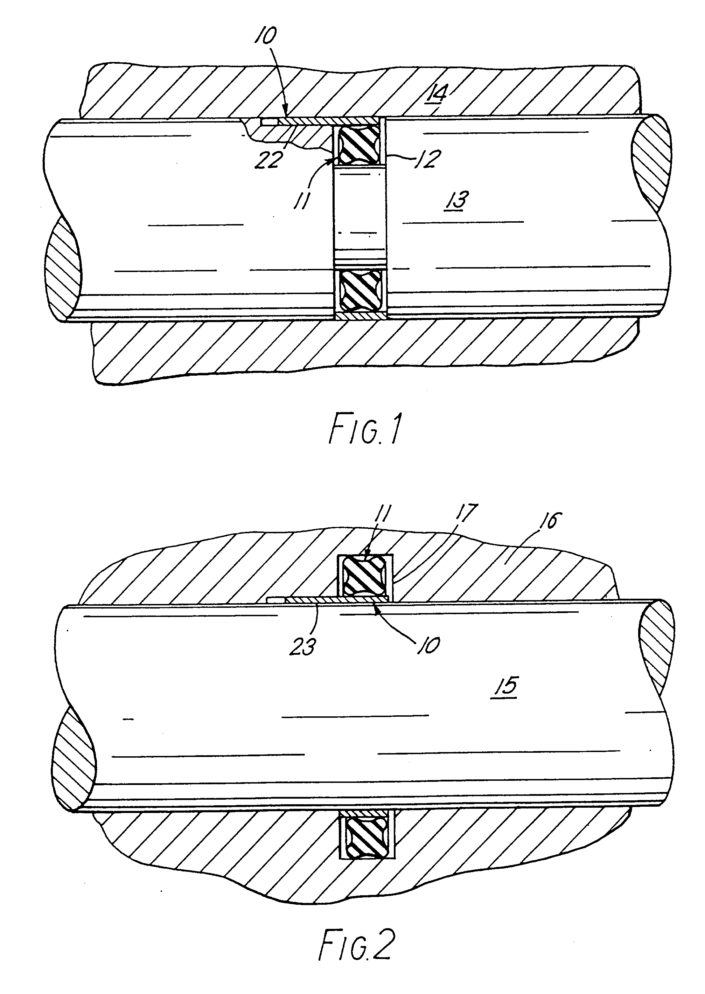

Figs. 1-2 illustrates the use of the new bearing-seal assembly. As shown, it includes an annular seal element 10 which is thin and of the split-ring type, having ends which overlap. This seal element is made of a plastic material which is either thermosetting or thermoplastic and is self-lubricating, having a pressure velocity value at least equal to 1800 at 100 feet per minute surface speed (6·5 x 10⁴ Pa.m.s⁻¹ at 0·5 m.s⁻¹ surface speed). It also includes an elastomeric back-up ring 11 which is made of flowable resilient material, such as rubber, and is sufficiently yieldable and forgiving so as to avoid undue pressure being applied to the backside of the seal element 10. Such a bearing-seal assembly will wear well over long periods of time and under unusually severe circumstances, such as where the relatively moving parts move at high speeds over prolonged periods. When mounted within a groove, as shown in Figs. 1-2, the bearing-seal assembly will adjust to dimensional changes in the moving parts, which reflect the changes in temperature caused by the high speed movement. Such a combination perfects a seal at the sealing surface and at the bottom of the groove so as to prevent the loss of lubricant between the moving parts, which will normally result from the differences in co-efficient of expansion of the different materials from which the two parts are made.

Fig. 1 shows such an installation as described hereinabove within a groove 12 which is formed in the outer circumference of a steel shaft 13 which is rotating at very high speeds within a brass bushing 14, the latter providing a housing for the shaft. It will be seen that the outer circumference of the seal element 10 bears against and seals against the sealing surface of the bushing 14 and the elastomeric back-up ring 11 exerts a slight pressure outwardly against the backside thereof. The back-up ring 11 also seals against the bottom of the groove so as to prevent the escape of lubrication around the assembly.

Fig. 2 shows a similar rapidly rotating steel shaft 15 mounted within a brass bushing 16. In this instance, however, the groove 17 is formed in the bushing 16 rather than in the exterior surface of the shaft 15. As a consequence, the seal element 10 bears against the exterior surface of the shaft 15 and the elastomeric back-up ring 11 is disposed therebehind within the groove 17 and urges the seal element 10 into sealing relation with the outer circumference of the shaft 15. It will be noted that in this instance, the seal is perfected at the inner diameter of the seal element 10, whereas in Fig. 1, the seal is perfected at the outer diameter thereof.

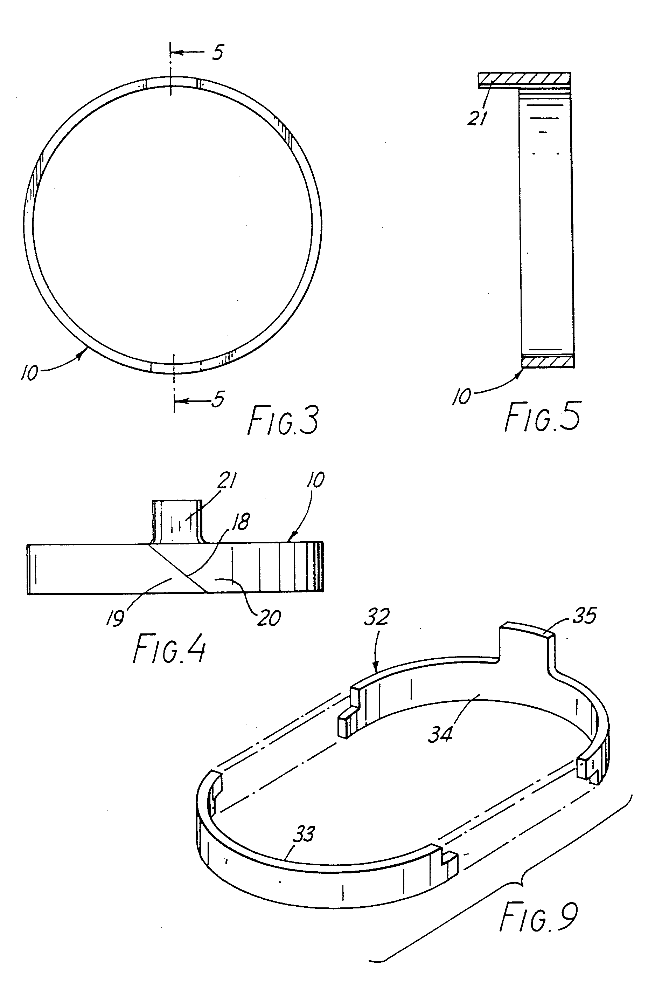

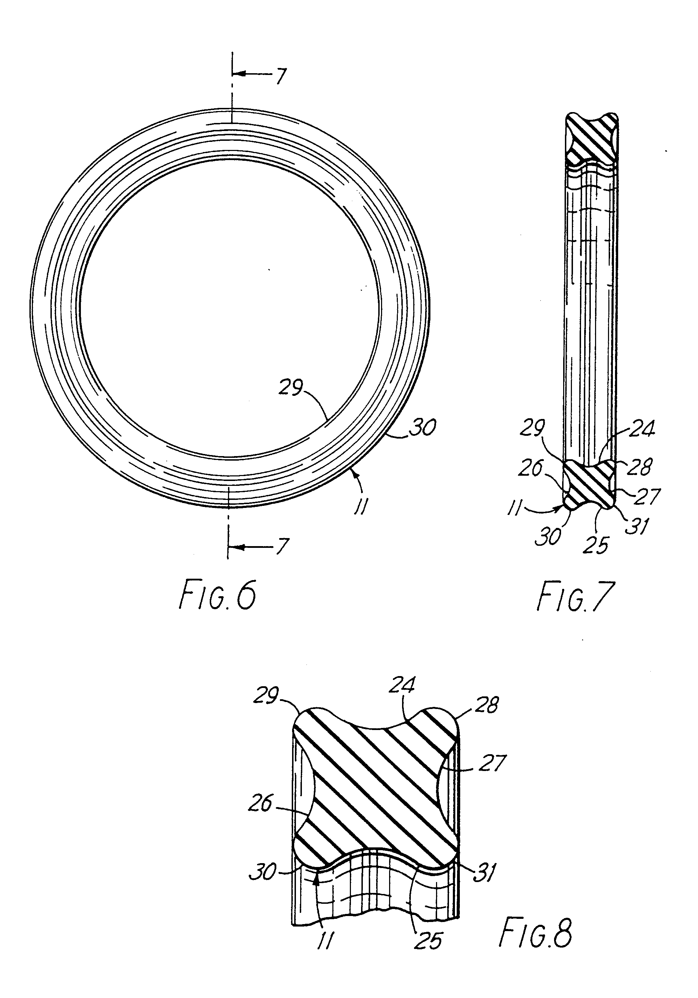

Figs. 3-5 show the details of the seal element 10. This seal element 10 is preferably molded from a moldable thermoplastic or thermosetting plastic having the inherent self-lubricating qualities described hereinabove as a result of its pressure velocity value of at least equal to 1800 at 100 feet per minute surface speed. As best shown in Fig. 5, it is generally rectangular in cross-section and is relatively thin. It is annular in shape and is cut diagonally as at 18 in Fig. 4 to provide end portions 19 and 20 which are capable of moving circumferentially and axially relative to each other.

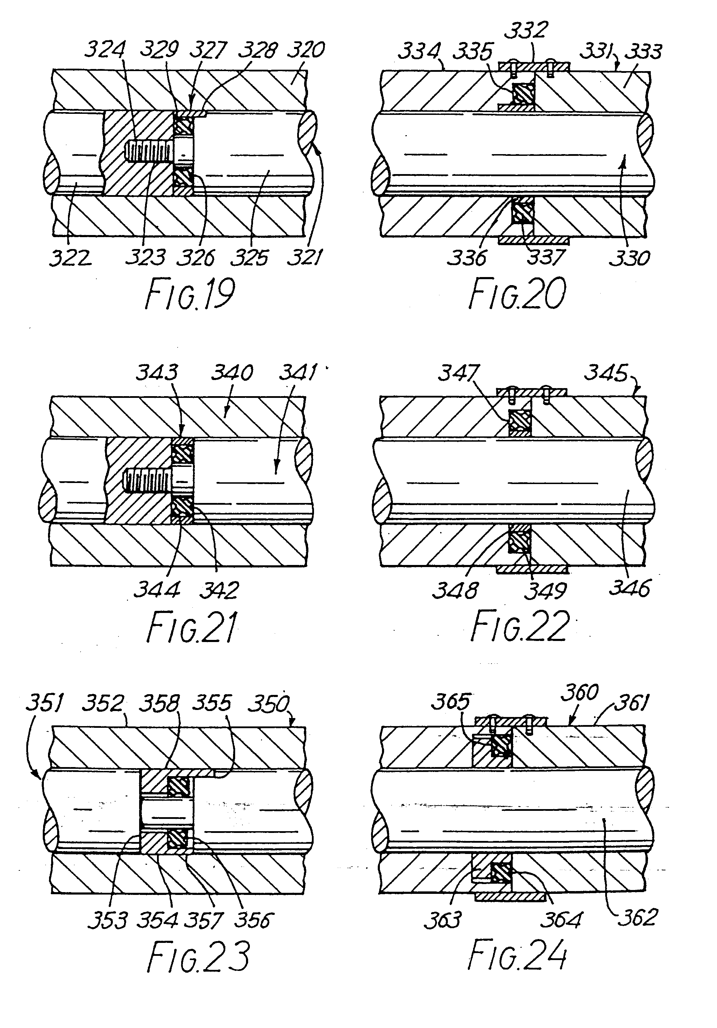

The seal element 10 is symmetrical throughout its length in cross section except for the small tang 21 which extends axially outwardly therefrom and fits into either of the openings 22 in Fig. 1, or 23 in Fig. 2. These openings are formed in the shaft and bearing, respectively, for the express purpose of receiving the tang therein, whereby the seal element 10 in Fig. 1 must rotate with the shaft 13 relative to the bushing 14, whereas in Fig. 2, the seal element 10 is prevented from rotating with the shaft 15. It will be noted that the tang 21 is slightly axially narrower than the opening in which it is received. The seal element 10 likewise is slightly narrower than the groove in which it is positioned.

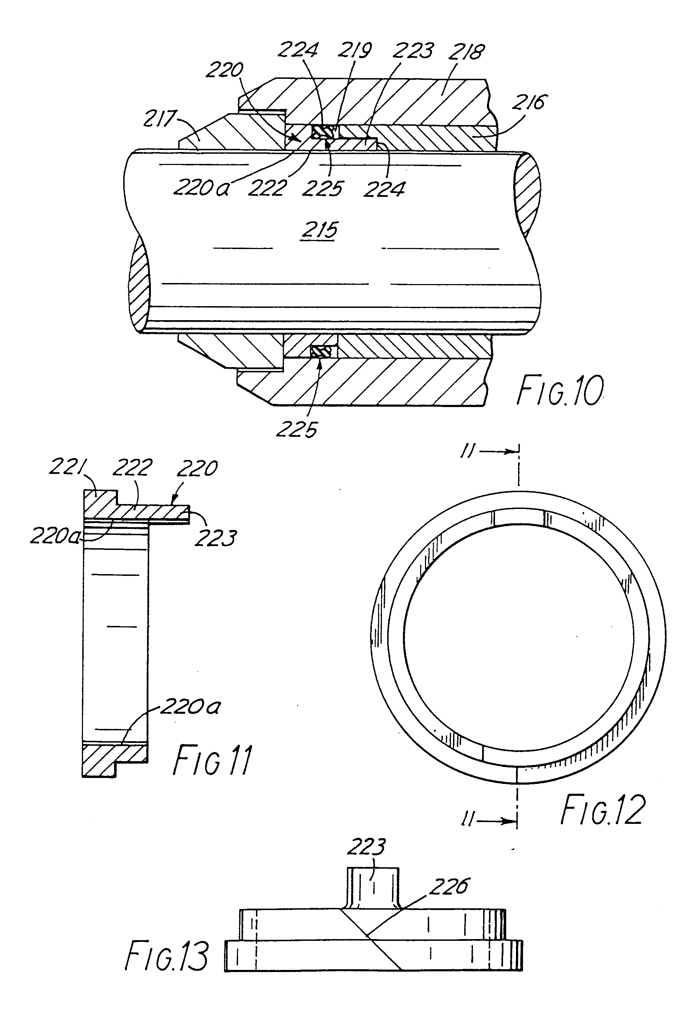

Figs. 6-8 show the details of the elastomeric back-up ring 11. This ring 11 is annular in shape, as shown in Fig. 6 and is generally square in cross-sectional configuration, as shown in Figs. 7 and 8. It is comprised of a flowable resilient material, such as rubber, is symmetrical throughout its length in cross-section, and is characterized by a pair of radially spaced working surfaces 24 and 25 and a pair of opposed axially spaced surfaces 26 and 27. Each of these surfaces 24-27, inclusive, is concave and each merges substantially tangentially with adjacent convex corner lobes, such as indicated by the numerals 28-31, inclusive.

The elastomeric back-up ring 11, as best shown in Fig. 8, has concavities 24-27 having a radius of curvature which is within the approximate range of 17%-33% of the maximum radial dimensions of the ring 11. These maximum radial dimensions are measured between the radially innermost and outermost points on the convex corner lobes, such as 28 and 31. The preferred range of the radius of curvature of the concavities of this ring is 24%-30% and the particularly preferred range is 27%-29%. The preferred single value of such radii is 28% of the maximum radial dimension. The convex corner lobes 28-31, inclusive, each have a convexity of 14%-16% of the maximum radial dimension of the ring. The preferred single convexity is 16% of that maximum radial dimension.

The range of the minimum radial dimension of the ring 11 is 60%-75% of the maximum radial dimension thereof. The preferred range is 60%-70% and the preferred single value is 68% of the maximum radial dimension. It has been found that an elastomeric ring 11 when utilized as described herein in combination with such a seal element, provides the necessary forgiveness or yielding function, which ensures that the seal element 10 will always be urged gently against the surface to be sealed, will not fill the groove to over-flowing, and will preclude undue pressure being applied to the seal element 10 under extreme circumstances caused by high-speed rotation or other movement over prolonged periods.

Fig. 9 shows a sectional annular seal element 32 which is comprised of pair of substantially identically constructed sections 33 and 34, the only difference being the presence of the tang 35 on section 34. It will be seen that the ends of each of the sections 33 and 34 are stepped so as to overlap and form an annular element when positioned within a groove, such as is shown in Figs. 1 and 2. Such a seal element can be molded relatively inexpensively and should function substantially as well as those shown in Figs. 1 and 2, when they are backed up with an elastomeric back-up ring, such as the ring 11 described hereinabove. When so mounted, the two sections 33 and 34 will define the split-ring seal element and will adjust by extension or contraction in response to dimensional variations in the moving parts, such as the shaft 13 and bearing 14.

As shown in Figs. 1 and 2, the new bearing assembly can be utilized so as to perfect a seal at either the internal diameter of the seal element or at its outer diameter. In either case, the back-up ring bears against the seal element and urges it gently against the opposed sealing surface to perfect a seal therebetween. Pressure within the range of 1.9 - 3.0 p.s.i. per linear inch of seal (1·3 x 10⁴ - 2·1 x 10⁴ Pa per 2·5 x 10⁻² m of seal) are created and applied to the seal element in this manner, the amount of pressure created being dependent upon the inherent variations in the groove area created by manufacturing tolerances stack-up. The latter is the sum of the variations in the bores, in the groove width and depth, and in the tolerances of the seal element itself. A groove will vary .006 inch (1·5 x 10⁻⁴m) in depth and .003 inch (7·5 x 10⁻⁵m) in width. The seal element itself will vary .006 inch (1·5 x 10⁻⁴m) in dimensions. The back-up ring must be compressed .010 inch (2·5 x 10⁻⁴m) when installed, in order to provide adequate pressure behind the seal element and yet not overfill the groove.

As the steel shaft rotates at high speed and over prolonged periods, substantial heat is generated. This heat creates dimensional changes in both the steel shaft and the brass bearing or housing. Without the seal assembly, the lubricant will escape between the shaft and brass housing. The seal assembly, however, adjusts in response to these changes in the steel shaft and brass bearing, the back-up ring urging the seal element against the opposed surface gently but firmly and causing the seal element to adjust circumferentially while maintaining sealing contact against the opposed sealing surface. The dimensional feature of the back-up ring outlined hereinabove preclude it from overflowing the groove with consequent undue pressure upon the seal element.

As indicated hereinabove, the back-up ring completes the seal at the bottom of the groove in either installation. As such, it prevents the escape of lubricant and avoids undue wear for extended periods of operation. In so doing, it eliminates extensive down-time and avoids severe wear damage which would otherwise occur when the lubricant escapes. It also greatly avoids costly replacement of parts which result from such undue wear.

Wherever herein the term "moldable" has been utilized, it is intended to include molding via injection molding and/or transfer molding.

As indicated above the seal element 10 can be manufactured from either thermoplastic or thermosetting plastic materials. A requirement is that the material have a pressure velocity value at least equal to 1800 at 100 feet per minute surface speed (6·5 x 10⁴ Pa.m.s⁻¹ at 0·5 m.s⁻¹ surface speed). Some of the materials which qualify as having such qualities are relatively expensive, whereas others are found to be of lower commercial value. Thus, for the circumstances where the wearing qualities are less demanding unmodified polycarbonates or unmodified polystyrene, which are both thermoplastics, may be utilized because they are relatively inexpensive. The temperatures which are reached as a result of the high speed movement has a strong bearing upon the decision of the plastic to be selected.

The split-ring feature of the seal element is such because it permits the seal element to contour to the shape and dimensions of the shaft. In other words, it provides for thermoexpansion of the parts between which the seal is to be perfected. It is imperative, however, that the spring of the back-up ring not be too strong, else the seal element will be urged against the sealing surface with undue pressure, resulting in undue wear of the material from which the seal element is molded. Over-filling of the groove, for example, will create such undue pressure and consequent excessive wear.

For cost effectiveness, probably a 6-10 Nylon with modifiers would be most desirable in the long run. Nylons, however, are relatively expensive in that they sell at the $3-$4 per pound range. Other plastic, such as polyethylene, polypropylene, styrene and polyvinylchloride, all thermoplastics, are sold in the neighborhood of $1 per pound, and since they are readily moldable, can be utilized in a large variety of circumstances, at a substantial saving in cost, particularly in view of the fact that they are moldable and, thus the cost of machining of the more expensive plastics is avoided.

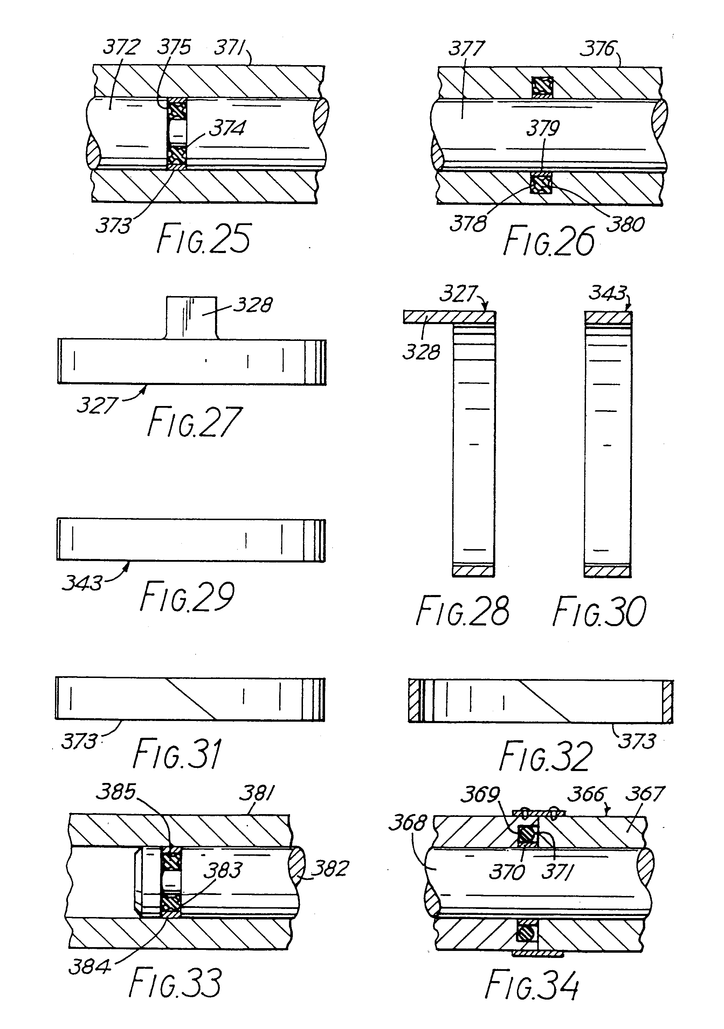

With the dimensions as defined above, it has been found that an effective, long lasting seal between metal surfaces, moving past each other at high speeds over prolonged periods can be provided. This movement can be the rotation of one part past another as shown in Fig. 1, or may be a reciprocating motion where, for example, the seal is mounted in the exterior surface of a piston and would appear as shown in Fig. 33. The design of the elastomeric back-up ring, such as the ring 11 , is such as to provide a gentle back-up pressure upon the flat seal element 10 throughout the entire range of temperature, and consequent dimensional changes, experienced in such metal parts when operated at high speeds over prolonged periods. Thus, when such parts become heated, substantial dimensional changes take place, with the result that the seal element 10, which is continually urged outwardly by the critically-dimensioned ring 11 , will adjust circumferentially to compensate therefor. This is accomplished by a change in circumference of the seal element permitted by shifting of the free ends 18 and 19 thereof relative to each other. At the same time, the elastomeric back-up ring, in the form of the annular elastic ring 11, will adjust its amount of compression within the groove. It will be noted that the dimensions of the groove also will be altered by the changes in temperature. These changes, plus the dimensional variations in the initial construction of the shaft, the groove, the bearing, and the ring itself, comprise total variations for which compensations are extremely difficult. It has been found, however, that a ring having dimensions within the critical ranges set forth herein, when utilized in combination with a seal element, such as the element 10, will adequately compensate for such changes.

It is believed that when such adjustments are required, the elastomeric material from which the ring 11 is manufactured flows into the substantial concavities 24-27 , inclusive, which are provided in each of the sides of the ring. Since this material is readily flowable, but non-compressible, it has avoided the problem heretofore experienced with the standard QUAD-ring or O-ring, none of which can adequately adjust to support such a seal element across the temperature ranges experienced, without applying undue pressure thereagainst, with consequent prohibitive wear.

It will be seen that the ring 11 also perfects a seal across the bottom of the groove 12, as well as at its top. Thus, it functions both as a seal and as an elastomeric spring which is sufficiently sensitive and yielding to ensure, in combination with the seal element 10, an adequate seal between the two relatively moving parts 13 and 14, over the entire temperature range experienced in such installations when operated at various high speeds.

As shown in Fig. 10-13 my bearing assembly may be utilized in conjunction with a shaft 215 which rotates about its longitudinal axis at high speed within a bronze bushing 216. The upper ends of this shaft and bushing terminate with a gear box (not shown) which contains lubricant designed to properly lubricate the relatively moving surfaces of these two parts. A spindle collar 217 is press-fitted upon the shaft 215 and rotates therewith and normally bears against the lower end of the bushing 216. A steel nut 218 extends downwardly around the spindle collar 217, as shown. This is the normal arrangement of these parts in the cotton picker as originally manufactured and put into use.

The seal element 220, as shown in Fig. 10-13 inclusive, is generally L-shaped in cross-sectional configuration so that a portion thereof 221 has radial dimensions substantially equal to the depth of the groove 219 while an axially spaced portion 222 thereof has lesser radial dimensions. This seal element is molded of such material as described hereinabove. The seal element 220 has a sealing surface 220a at its ID which bears against the shaft 215 and perfects a seal thereagainst. The axial dimensions of the seal element 220 are slightly less than the actual dimensions of the groove 219.

A tang member 223 extends laterally in the form of an axial projection upwardly into an opening 224 which I form in end of the bronze bearing 216. The purpose of the tang 223 and the opening 224 is to prevent the seal element 220 from rotating with the shaft 215. The self-lubricating properties of the seal element 220 prevents substantial wear thereof as the shaft 215 rotates. The differences in the radial dimensions of the two portions 221 and 222 provides a secondary groove 224 within which I install an elastomeric spring in the form of a back-up ring 225.

As previously stated, the seal element 220 is not continuous in that it is comprised of a split ring, the split being shown and identified with the numeral 226 in Fig. 13 Thus, the ends of the split ring seal element are capable of adjustment relative to each other. This feature is important in permitting the seal element to adjust to the variations in diameter caused by the heat which is generated by the high speed of rotation of the shaft 215.

The elastomeric ring 225 is made of a uniformly resilient flowable rubber-like material which is generally an elastomer having properties similar to rubber. The shape of the elastomeric ring 225 is the same as the ring 11 described above and shown in figures 6 to 8. The ring is right-angled polygonal in cross-sectional configuration, preferably having maximum radial dimensions equal to its maximum axial dimensions. The ring is symmetrical and uniform throughout in cross-sectional shape. As shown for the ring 11 in figures 6 to 8, each of its sides is concave and each of its corner portions have convex lobes 28-31 thereat. The concavities between the lobes 28-31, identified by the numerals 24-27 have a radius of curvature approximating 28% of the maximum cross-sectional dimension of the ring. The concavities 24-27 merge tangentially with the convex lobes 28-31.

The maximum radial dimension of the ring 225 when combined with the radial dimension of the thinner portion 222 of the seal element against which it bears, is slightly greater than the radial dimensions of the groove 224 so that as a result, the element 220 is always maintained under slight radial compression by the ring 225 in order to perfect the seal between the element 220 and the shaft 215 at the surface at which they meet.

The ring 225, unlike the seal element 220 is continuous throughout and is of uniform cross-sectional configuration throughout The radius of the convex corner lobes 27-31 is approximately 16% of the maximum radial dimension of the ring.

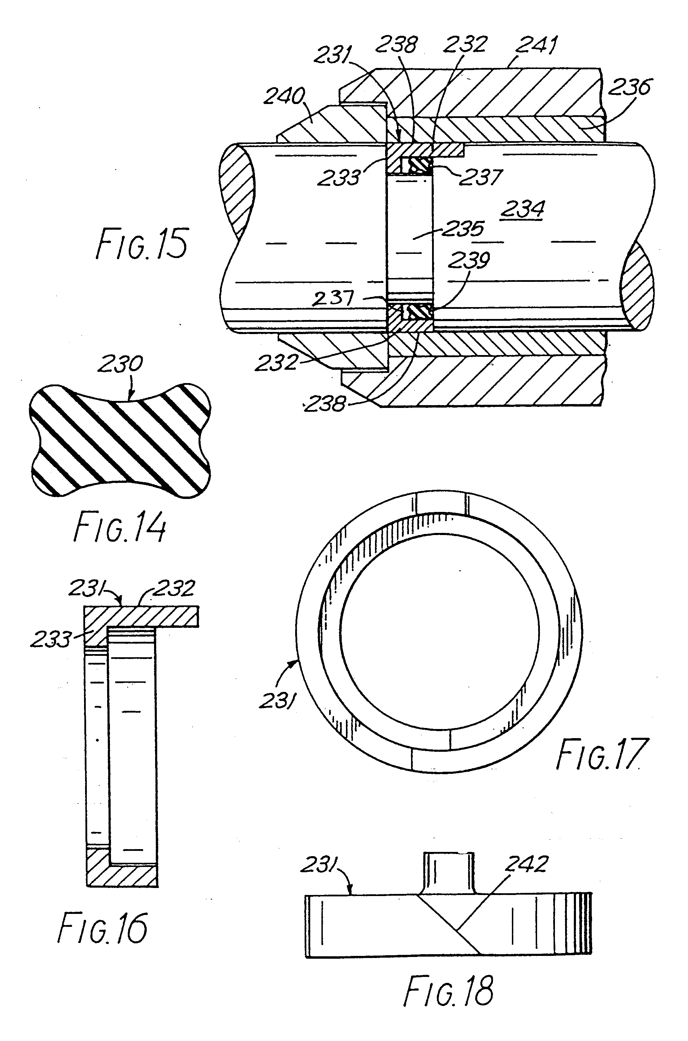

The ring 225 need not necessarily be generally square in cross-section as shown and described. Instead, the groove may be made axially longer, with the result that the ring will have a greater axial length than its radial dimension, such as is shown by the ring 230 in Fig. 14. Such a ring may be utilized when the groove has greater axial dimensions than its radial dimensions. It will be noted, however, that the combined radial dimension of the ring 230 and of the portion of the seal element against which it bears will be slightly greater than the radial dimensions of the groove. Similarly, and like the installation shown in Fig. 10 and as described herein, the axial dimensions of the ring 230 when combined with the axial dimensions of the portion of the seal element along which it extends will be slightly less than the axial dimensions of the groove.

Figs. 15-18 show a construction similar to that shown in Fig. 10 except that the bearing is constructed in such a way that the seal is perfected between the housing and the shaft at the OD surface of the seal element. Thus, as seen in Fig. 15-16, the section of the seal element 231 which has the greater axial dimension is at the external circumference of the bearing member. The portion which has the lesser radial dimension is identified by the numeral 232 and the portion having the greater dimension is identified by the numeral 233. Thus, the portion 232 has lesser radial dimensions than the portion 233 but has greater axial dimensions and the seal is perfected at the OD surface of the seal element 231 instead of at the ID surface of the seal element as shown in Fig. 15. In all other respects, the installation is similar except that the seal element rotates with the shaft 234.

It will be seen that a groove 235 is formed in the shaft. The latter rotates within the bronze bushing 236 and defines the groove 235 therewith. The seal element 231 lies within this groove and the outer surface of the portion 232 perfects a seal as at 238 against the bearing 236.

The back-up ring 239 may have the same dimensions and relationship to the secondary groove 237 as defined hereinabove with respect to the ID seal shown in Fig. 10 in that the ring 239 has radial dimensions such as to maintain the portion 232 of the seal element 231 under compression against the inner surface of the bushing 236. Numerals 240 and 241 identify the spindle collar and steel nut, respectively.

The seal element 231 is split as indicated by the numeral 242 in Fig. 18 so that the ends thereof may shift relative to each other and thus compensate for the variations in surface dimensions caused by the heat generated by the rapidly rotating shaft 234. As indicated, the back-up ring 239 maintains the bearing under compression against the inner surface of the bushing 236 to perfect the seal between the seal element 231 and the bushing 236. It also has lesser axial dimensions than the groove 237 and bears against portion 233 of the seal element.

In operation, the elastomeric ring which is in the form of a back-up ring such as elements 225, 239, maintains the seal elements under compression against the surface at which the seal is to be perfected. This surface is at the surface of the seal element which has the greater axial dimensions. It has been found that through the use of a seal element such as described herein, the loss of lubricants from such installations can greatly be diminished and that as a result thereof, there is a very great reduction in down-time and need for replacement of parts, because the wear that is experienced is greatly reduced. This occurs because the lubricant is contained in the gear box and as a consequence, the bronze bushing remains lubricated over much greater extended periods than has heretofore been experienced. The back-up rings 225 and 239 function to maintain a slight pressure against the seal element at all times so that maximum advantage may be taken of its inherent self-lubricating qualities. This ensures long wear and at the same time provides an effective seal to prevent the escape of lubricant between the shaft and the bronze bushing.

The elastomeric rings 225, 239 are highly yieldable and sensitive and, therefore, ready compensation is provided for variations in dimensions caused by changes in temperature of the relatively rotating parts. Concerning installations which are designed to greatly extend the useful life span of parts of machines which are already in the field, it will be readily appreciated that similar constructions may be utilized by original equipment manufacturers and that when this is done, there will be a great improvement in the performance of such machinery, and the useful life span thereof will be substantially extended.

The pressure velocity value of a plastics sample is determined by applying the sample to a dry carbon steel rod spinning rapidly at 20°C. at 100 ft surface speed per minute (0·5 m.s⁻¹) and applying pressure to the sample until the heat generated thereby commences to destroy the sample . Its pressure velocity value is obtained by multiplying the pressure applied to the sample (just prior to the start of its destruction) and the velocity of the shaft. In other words, pressure velocity value is the product of the pressure applied to such a sample just prior to its destruction and the surface speed of rotation of the shaft. Pressure velocity values are thus measured in pounds per square inch (P.S.I.) (1 P.S.I. = 7·05 x 10³ Pa) multiplied by the surface speed expressed in feet per minute (1ft per minute = 5 x 10⁻³m.s⁻¹), at 20°C.

The seal element is formed of a plastic material which is preferably thermoplastic; however thermosetting materials may be used. Some examples of the materials which It has been found well adapted for this purpose are unmodified polycarbonates and unmodified polystyrenes. These two materials will work well in low speed, low pressure applications and are relatively inexpensive. The temperature at which the relatively moving parts operate determine the decision as to which type of plastic will be selected. For cost reasons, the seal element should be moldable, which means that it should be either injection-moldable or moldable via transfer molding. For cost effectiveness, probably a 6/10 nylon with modifiers would be most desirable in the long run, since it will cover a wide variety of applications and is relatively inexpensive. Other materials which can be utilized are polyethylene, polypropylene, styrene and polyvinylchlorene, all of which are thermoplastics. The important considerations are that the material be moldable and that it have a pressure-velocity value of no less than 1800 at 100 feet per minute surface speed (6·5 x 10⁴ Pa.m.s⁻¹ at 0·5 m.s⁻¹ surface speed).

The construction shown in Fig. 19 includes support structure comprised of a housing member 320 in which a sectional shaft 321 is mounted for high speed motion relative to the housing. This motion may be either longitudinal or rotary about its longitudinal axis. As shown, the shaft 321 is comprised of one section 322 which is tapped as at 323 to receive a threaded end 324 of the other section 325 of the shaft. The end of the section 325 which carries the threaded portion 324 is relieved as at 326 to provide a groove within the shaft 321 designed to accept and receive the bearing-seal assembly to be hereinafter described.

Mounted within the groove 326 is a continuous annular seal element 327 which is of uniform radial dimensions throughout in cross-section, as shown in Fig. 28, and has a tang 328 which extends axially outwardly from one of its sides into a small opening provided therefore within the shaft section 325. This tang 328 precludes relative circumferential movement between the seal element 327 and the shaft. The outer circumferential surface of the seal element 327 is equal to the inner surface of the tubular housing 320.

Mounted behind the seal element 327 is an elastomeric back-up ring 329. This ring 329 is made of readily flowable material such as rubber and is preferably polygonal in cross section, of substantially equal transverse dimensions, and is provided with convex corners lobes and opposed concave sides, the degrees of concavity and convexity of which and the maximum and minimum radial dimensions of which have predetermined values within critical ranges as described above
The seal element 327 is continuous and molded of plastic material having inherent self-lubricating qualities with a pressure velocity of no less than 1800 at 100 feet per minute surface speed (6·5 x 10⁴ Pa.m.s⁻¹ at 0·5 m.s⁻¹ surface speed). This is the same material as identified above.

As pointed out herein, this material has a very high self-lubricating inherent quality. I have discovered that when it is installed in combination with the elastomeric back-up ring dimensioned, as disclosed herein, such a seal can be run dry without other lubrication for extended periods far in excess of bearings heretofore known.

The elastomeric ring 329 is properly dimensioned
Accordingly, its minimum radial dimensions are preferably 60-70% of its maximum radial dimensions and the radius of concavity of the concave sides approximates 24-33% of such maximum radial dimensions. This continuous ring may have minimum radial dimensions as great as 75% of its maximum radial dimensions, but such a ring does not function nearly as well as when the said radial dimensions are maintained within the 60-70% range.

Fig. 20 is similar to Fig, 19 except that the groove is formed in the housing and the housing is sectionalized, rather than the shaft. The shaft 330 is mounted for high speed movement relative to the sectionalised housing 331, the sections of which are held together by securing means 332. One section of the housing 331 is identified by the numeral 333 and the other section 334 has a groove 335 formed in its inner end to accomodate the continuous annular seal element 336 and the elastomeric ring 337. The seal element 336 and the ring 337 are manufactured of the same materials as the seal element 327 and ring 329 although, of course, the ring 337 is of larger diameter because its interior surface bears upon the exterior surface of the seal element 336 rather than the interior surface, as shown in Fig. 19.

Fig. 21 shows the same support structure as shown in Fig. 19. This support structure includes the housing 340 and a sectionalized shaft 341, the latter being constructed identically to the shaft 321. The shaft 341 has a groove 342 formed therein to accommodate a continuous annular seal element 343 and an elastomeric back-up ring 344 therebehind. The latter and the seal element 343 are constructed identically to the seal element and ring of Fig. 19 except that it is constructed without a tang. It will be noted that it is of uniform radial dimensions throughout its length. It should be noted that the back-up ring shown in each of the Figs. herein is of slightly lesser axial dimensions than the width of the groove in which it is mounted.

Fig. 22 shows a support structure similar to that shown in Fig. 20 except that no provision is made for a tang in the seal element. As shown, it includes a sectionalized housing 345 and a shaft 346 mounted for high speed movement relative thereto. A groove 347 is formed in one of the sections of the housing to accommodate a continuous annular seal element 348 which is biased radially inwardly by continuous elastomeric back-up ring 349. The seal element 348 and the back-up ring 349 are manufactured in essentially the same manner and of the same materials and have the same relationship as those shown and described herein with respect to Figs. 19-21 The back-up ring in each instance is mounted under slight radial compression so as to cause the seal element to bear against the sealing surface of the support structure opposed thereto.

Fig. 23 shows support structure 350 in which the shaft 351 is sectionalized as shown in Fig. 19 and has a groove 353 formed therein adapted to accommodate seal element 354 which is L-shaped in cross-section throughout its length and includes a tang 355. The seal element 354 is continuous throughout its length and is constructed of the same material as the seal elements hereinbefore described and, likewise, is molded. An elastomeric back-up ring 356 is mounted within the groove behind and within the portion of the seal element 354 which is of lesser radial dimension and is under slight radial compression so as to continuously apply slight pressure to the seal element which transmits such pressure against the sealing surface of the housing opposite thereto. Thus, the seal element has a sealing surface 357 opposite to and bearing against the sealing surface 358 of the housing.

Fig 24 shows support structure 360 similar to that shown in Fig. 23 except that the housing 361 is sectionalized instead of the shaft 362, as is the case in Fig. 23.

The L-shaped seal element 363 is mounted within the groove 364 and the elastomeric back-up ring 365 is mounted behind the portion of the seal element having the lesser radial dimensions in pressure-applying relation so that the inner diameter sealing surface of the seal element 363 is brought to bear gently against the exterior sealing surface of the shaft 362.

Fig. 34 shows a support structure 366 which includes a sectionalized housing 367 and a shaft 368 mounted therewithin for high speed relative movement. As shown, there is a groove 369 formed in one of the sections of the housing 367 and a seal element 370 is mounted therewithin with a conventional O-ring 371 encircling the same and bearing thereagainst while under slight radial compression. While a construction such as this will not function as well as those shown in Figs. 19-24 inclusive, this particular combination does constitute an improvement over other bearings heretofore known.

Fig. 25 shows support structure in the form of housing 371 and shaft 372. A split ring seal element 373 and a continuous elastomeric back-up ring 374 is mounted within a groove 375 formed within the shaft. The split seal element 373 does not include a tang.

Fig. 26 shows a seal assembly similar to that shown in Fig. 25 but different in that the groove is formed in the housing 376 instead of in the shaft 377. The groove 378 accomodates a split ring seal element 379 which is urged inwardly by the elastomeric back-up ring 380 which encircles the seal element 379 and is compressed slightly in a radial direction so as to urge the sealing surface of the seal element against the sealing surface of the shaft 377 lightly.

Fig. 33 shows a cylinder 381 with its piston 382 having a groove 383 formed therein to accomodate a split ring seal element 384 which is rectangular in cross-section and is urged outwardly against the sealing surface of the housing by an elastomeric back-up ring 385 which is mounted therebehind. The seal element 384 is manufactured of the same materials as that of which the other bearings described herein are comprised and is molded. The ring 385 is manufactured of the same materials as those described with respect to the other back-up rings shown herein and with the same proportions. In fact, each of the back-up rings shown and described herein, with the exception of the O-ring 371 and the ring shown in figure 14, has the same relative dimensions and shape. Also, each of the seal elements and described herein is molded and is comprised of the same materials as described with respect to that shown in Fig. 19.

It has been found that the seal assemblies disclosed and claimed herein are highly superior to those heretofor known and can be manufactured and sold at a substantial savings over seal assemblies heretofore machined and utilized. Surprisingly, it has been found that seal assemblies of the type shown and claimed herein can be run dry without the use of additional lubricant and that such seal assemblies will perform for much longer periods than those heretofore known. The tests which we have performed to date indicate that these seal assemblies will in all likelihood enjoy a life span approaching 10 times the life span of seal assemblies heretofore commonly in use in the industry. In each case, the elastomeric back-up ring is dimensioned so that its surface which bears against the seal element is equal to that bearing surface and circumference, and the surface of the seal element which bears against the sealing surface of the support structure is of the same dimensions as that of the sealing surface of the support structure. Thus, the only pressure which is applied to the sealing surface of the seal element is transmitted to, and imposed thereupon, by the supporting elastomeric back-up ring disposed therebehind for the purpose of applying slight radial pressure against the seal element and sealing surfaces. The forgiving nature of the back-up ring maintains the seal between the two sealing surfaces without applying undue pressure and consequent wear thereto. At the same time it precludes the passage of fluid around the seal element.

## Claims

1. A seal assembly for providing a seal between a first member (13,15) and a second member (14,16) moveable relative thereto, comprising an annular seal element (10) composed of plastics material and an elastomeric back-up ring (11) located in an annular groove in one of the members, the back-up ring abutting a surface of the groove and at least a portion of the seal element to urge the seal element in a working direction of the seal assembly towards the other of the members, the combined dimensions, in the working direction, of the portion of the seal element and of the back-up ring in its free form slightly exceeding a corresponding dimension of the groove and the cross-section of the back-up ring being generally X-shaped with convexly curved corner portions (28,29,30,31) linking concavely curved side faces (24,25,26,27), a pair of opposed surfaces of the ring constituting working surfaces, characterised in that, in the working direction, in an unstressed condition of the back-up ring, the minimum distance between the working surfaces is 60% to 70% of the maximum distance between the working surfaces.

2. A seal assembly according to claim 1, in which in the working direction the minimum distance between the working surfaces is approximately 68% of the maximum distance between the working surfaces.

3. A seal assembly according to claim 1 or 2, in which the radius of curvature of the concave portion of each of the pair of working surfaces of the unstressed back-up ring is approximately 17% to 30% of the maximum distance between the working surfaces in the working direction.

4. A seal assembly according to claim 3, in which the radius of curvature of the concave portion of each of the pair of working surfaces of the unstressed back-up ring is approximately 28% of the maximum distance between the working surfaces in the working direction.

5. A seal assembly according to claim 3 or 4, in which the radius of curvature of each of the convex corner portions of the unstressed back-up ring is about one half the radius of curvature of the concave portion of each of the working surfaces.

6. A seal assembly according to any preceding claim, in which the radius of curvature of each of the convex corner portions of the unstressed back-up ring is about 14-16% of the maximum distance between the working surfaces in the working direction.

7. A seal assembly according to any preceding claim, in which the dimensions of the seal element and the back-up ring in a direction perpendicular to both the working direction and the circumferential direction of the seal assembly are slightly less than a corresponding dimension of the groove.

8. A seal assembly according to any preceding claim, in which the annular seal element (10) is split at at least one position (18) around its circumference.

9. A seal assembly according to claim 8, characterised in that the ends of the split (18) overlap in the circumferential direction.

10. A seal assembly according to any preceding claim, in which the annular seal element (220) is of L-shaped cross-section.

11. A seal assembly according to any preceding claim, in which a tang (21) extends from the seal element and is receivable in a recess (22) in a side wall of the groove for locating the seal element.

12. A seal assembly according to any preceding claim, characterised in that the seal element is not externally lubricated.

13. A seal assembly according to any preceding claim, in which the plastics material of which the seal element is composed is mouldable and has a pressure-velocity value not less than 1800 at 100 feet per minute surface speed (6.5 x 10⁴ Pa.m.s⁻¹ at 0.5 m.s⁻¹ surface speed).

14. A seal assembly according to any preceding claim, in which the first member is a shaft or piston, the second member comprises a bore for receiving the first member, and the working direction of the seal assembly is radial with respect to the shaft or piston axis.

15. An elastomeric back-up ring for lightly urging an annular seal element into sealing contact with a relatively movable surface, comprising a one-piece annular body of elastomeric material having a generally X-shaped cross section with convexly curved corner portions merging with concavely curved side portions, characterised in that in an unstressed condition of the ring, the minimum distance between a pair of opposed side surfaces of the ring is 60% to 70% of the maximum distance between the opposed side surfaces.

16. An elastomeric back-up ring according to claim 15, in which, the minimum normal distance between the opposed surfaces is approximately 68% of the maximum normal distance between the opposed side surfaces.

17. An elastomeric back-up ring according to claim 15 or 16, in which the radius of curvature of the concave portion of each of the opposed surfaces is approximately 17% to 30% of the maximum normal distance between the opposed side surfaces.

18. An elastomeric back-up ring according to claim 17, in which the radius of curvature of the concave portion of each of the opposed surfaces is approximately 17% to 28% of the maximum normal distance between the opposed side surfaces.

19. An elastomeric back-up ring according to any of claims 15 to 18, in which the radius of curvature of each convex corner portion is about one half of the radius of curvature of the concave portion of each of the opposed side surfaces.

20. An elastomeric back-up ring according to any of claims 15 to 19, in which the radius of curvature of each convex corner portion is about 14% to 16% of the maximum normal distance between the opposed side surfaces.

## Patentansprüche

1. Dichtung zwischen einem ersten Bauteil (13, 15) und einem relativ beweglichen zweiten Bauteil (14, 16) mit einem ringförmigen Dichtelement (10) aus Kunststoff und einem elastomeren Stützring (11) in einer Ringnut in einem der Bauteile, wobei der Stützring an einer Nutfläche und zumindest einem Abschnitt des Dichtelements anliegt und das Dichtelement in Arbeitsrichtung der Dichtung an das andere Bauteil drückt, wobei in Arbeitsrichtung die kombinierten Maße des Abschnitts des Dichtelements und des Stützrings in dessen freier Form die entsprechenden Maße der Nut und des Querschnitts des Stützrings leicht überschreiten, wobei der Querschnitt des Stützrings allgemein X-förmig mit konvexen Eckabschnitten (28, 29, 30, 31) ist, die konkave Seitenflächen (24, 25, 26, 27) verbinden, und ein Paar einander gegenüberliegende Ringflächen die Arbeitsflächen bilden, dadurch gekennzeichnet, daß in Arbeitsrichtung im spannungsfreien Zustand des Stützrings der minimale Abstand zwischen den Arbeitsflächen 60 % bis 70 % des maximalen Abstandes zwischen den Arbeitsflächen beträgt.

2. Dichtung nach Anspruch 1, in der in Arbeitsrichtung der minimale Abstand zwischen den Arbeitsflächen etwa 68 % des maximalen Abstandes zwischen den Arbeitsflächen beträgt.

3. Dichtung nach Anspruch 1 oder 2, in der der Krümmungsradius des konkaven Abschnittes beider Flächen des Arbeitsflächenpaares des spannungsfreien Stützrings etwa 17 % bis 30 % des maximalen Abstands zwischen den Arbeitsflächen in Arbeitsrichtung beträgt.

4. Dichtung nach Anspruch 3, in der der Krümmungsradius des konkaven Abschnitts jeder Fläche des Arbeitsflächenpaares des spannungsfreien Rings etwa 28 % des maximalen Abstands zwischen den Arbeitsflächen in Arbeitsrichtung beträgt.

5. Dichtung nach Anspruch 3 oder 4, in der der Krümmungsradius jeder der konvexen Eckabschnitte des spannungsfreien Stützrings etwa die Hälfte des Krümmungsradius des konkaven Abschnitts jeder der Arbeitsflächen beträgt.

6. Dichtung nach einem der vorhergehenden Ansprüche, in der der Krümmungsradius jedes der konvexen Eckabschnitte des spannungsfreien Stützringes etwa 14 bis 16 % des maximalen Abstands zwischen den Arbeitsflächen in Arbeitsrichtung beträgt.

7. Dichtung nach einem der vorhergehenden Ansprüche, in der die Maße des Dichtelements und des Stützrings in einer sowohl zur Arbeitsrichtung als auch zur Umfangsrichtung senkrechten Richtung der Dichtung etwas kleiner als die entsprechenden Maße der Nut sind.

8. Dichtung nach einem der vorhergehenden Ansprüche, in der das ringförmige Dichtelement (10) an mindestens einer Stelle (18) entlang seines Umfanges gespalten ist.

9. Dichtung nach Anspruch 8, dadurch gekennzeichnet, daß sich die Enden der Spaltung (18) in Umfangsrichtung überlappen.

10. Dichtung nach einem der vorhergehenden Ansprüche, in der das ringförmige Dichtelement (220) einen L-förmigen Querschnitt aufweist.

11. Dichtung nach einem der vorhergehenden Ansprüche, in der sich ein Mitnehmerlappen (21) vom Dichtelement erstreckt und in einer Ausnehmung (22) in einer Seitenwand der Nut zur Arretierung des Dichtelements aufgenommen wird.

12. Dichtung nach einem der vorhergehenden Ansprüche, dadurch gekennzeichnet, daß das Dichtelement nicht extern geschmiert wird.

13. Dichtung nach einem der vorhergehenden Ansprüche, in der das Kunststoffmaterial, aus dem das Dichtelement beschaffen ist, formbar ist und einen Druck-Geschwindigkeitswert nicht kleiner als 1800 bei 100 Fuß/min. Umfangsgeschwindigkeit (6,5 x 10⁴ Pa.m.s⁻¹ bei 0.5 m.s⁻¹ Umfangsgeschwindigkeit) hat.

14. Dichtung nach einem der vorhergehenden Ansprüche, in der das erste Bauteil eine Welle oder ein Kolben ist, das zweite Bauteil eine Bohrung zur Aufnahme des ersten Bauteil aufweist und die Arbeitsrichtung der Dichtung radial in bezug auf die Wellen- oder Kolbenachse ist.

15. Elastomerer Stützring zum leichten Andrücken eines ringförmigen Dichtelements in Dichtberührung an eine sich relativ bewegende Fläche mit einem einstückigen Körper aus elastomerem Material mit allgemein X-förmigem Querschnitt mit konvexen Eckabschnitten, die in konkave Seitenabschnitte übergehen, dadurch gekennzeichnet, daß bei spannungsfreiem Ring der minimale Abstand zwischen einem Paar gegenüberliegender Seitenflächen des Rings zwischen 60 % und 70 % des maximalen Abstands zwischen gegenüberliegenden Seitenflächen beträgt.

16. Elastomerer Stützring nach Anspruch 15, in dem der minimale Normalabstand zwischen den gegenüberliegenden Flächen etwa 68 % des maximalen Normalabstands zwischen den gegenüberliegenden Seitenflächen beträgt.

17. Elastomerer Stützring nach Anspruch 15 oder 16, in dem der Krümmungsradius des konkaven Abschnitts jeder der gegenüberliegenden Flächen etwa 17 % bis 30 % des maximalen Normalabstandes zwischen den gegenüberliegenden Seitenflächen beträgt.

18. Elastomerer Stützring nach Anspruch 17, bei dem der Krümmungsradius des konkaven Abschnitts jeder der gegenüberliegenden Flächen etwa 17 % bis 28 % des maximalen normalen Abstands zwischen den gegenüberliegenden Seitenflächen beträgt.

19. Elastomerer Stützring nach einem der Ansprüche 15 bis 18, bei dem der Krümmungsradius jedes konvexen Eckabschnitts etwa die Hälfte des Krümmungsradius des konkaven Abschnitts jeder der gegenüberliegenden Seitenflächen beträgt.

20. Elastomerer Stützring nach einem der Ansprüche 15 bis 19, bei dem der Krümmungsradius jedes der konvexen Eckabschnitte etwa 14 % bis 16 % des maximalen normalen Abstands zwischen den gegenüberliegenden Seitenflächen beträgt.

## Revendications

1. Assemblage d'étanchéité pour assurer une étanchéité entre un premier élément (13, 13) et un second élément (14, 16) mobiles l'un par rapport à l'autre, comprenant un élément d'étanchéité annulaire (10) réalisé en matière plastique et une bague d'appui on élastomère (11) positionnée dans une gorge annulaire ménagée dans l'un des éléments, la bague d'appui venant en butée contre une surface de la gorge et contre au moins une partie de l'élément d'étanchéité pour pousser l'élément d'étanchéité suivant une direction de fonctionnement de l'assemblage d'étanchéité, en direction de l'autre des éléments, les dimensions combinées, suivant la direction de fonctionnement, de la partie de l'élément d'étanchéité et de la bague d'appui dans sa forme libre excédant légèrement une dimension correspondante de la gorge et la section en coupe de la bague d'appui présentant la forme générale d'un X muni de parties d'angle incurvées de façon convexe (28, 29, 30, 31) reliant des faces latérales incurvées de façon concave (24, 25, 26, 27), une paire de surfaces opposées de la bague constituant dos surfaces de fonctionnement, caractérisé en ce que, suivant la direction de fonctionnement, dans une condition de non soumission à des contraintes de la bague d'appui, la distance minimum séparant les surfaces de fonctionnement vaut de 60% à 70% de la distance maximum séparant les surfaces de fonctionnement.

2. Assemblage d'étanchéité selon la revendication 1, dans lequel suivant la direction de fonctionnement la distance minimum séparant las surfaces de fonctionnement vaut approximativement 68% de la distance maximum séparant les surfaces de fonctionnement.

3. Assemblage d'étanchéité selon la revendication 1 ou 2, dans lequel le rayon de courbure de la partie concave de chaque surface de la paire de surfaces de fonctionnement de la bague d'appui non soumise à des contraintes vaut approximativement 17% à 30% de la distance maximum qui sépare les surfaces de fonctionnement suivant la direction de fonctionnement.

4. Assemblage d'étanchéité selon la revendication 3, dans lequel le rayon de courbure de la partie concave de chaque surface de la paire de surfaces de fonctionnement de la bague d'appui non soumise à des contraintes vaut approximativement 28% de la distance maximum qui sépare les surfaces de fonctionnement suivant la direction de fonctionnement.

5. Assemblage d'étanchéité selon la revendication 3 ou 4, dans lequel le rayon de courbure de chacune des parties d'angle convexes de la bague d'appui non soumise à des contraintes vaut environ la moitié du rayon de courbure de la partie concave de chacune des surfaces de fonctionnement.

6. Assemblage d'étanchéité selon l'une quelconque des revendications précédentes, dans lequel le rayon de courbure de chacune des parties d'angle convexes de la' bague d'appui non soumise à des contraintes vaut environ 14 à 16% de la distance maximum qui sépare les surfaces de fonctionnement suivant la direction de fonctionnement.

7. Assemblage d'étanchéité selon l'une quelconque des revendications précédentes, dans lequel les dimensions de l'élément d'étanchéité et de la bague d'appui suivant une direction perpendiculaire à la fois à la direction de fonctionnement et à la direction circonférencielle de l'assemblage d'étanchéité sont légèrement inférieures à une dimension correspondante de la gorge.

8. Assemblage d'étanchéité selon l'une quelconque des revendications précédentes, dans lequel l'élément d'étanchéité annulaire (10) est fondu en au moins une position (18) autour de sa circonférence.

9. Assemblage d'étanchéité selon la revendication 8, caractérisé en ce que les extrémités de la tante (18) se chevauchent suivant la direction circonférencielle.

10. Assemblage d'étanchéité selon l'une quelconque des revendications précédentes, dans lequel l'élément d'étanchéité annulaire (220) présente une section en coupe conformée en L.

11. Assemblage d'étanchéité selon l'une quelconque des revendications précédentes, dans lequel une languette (21) s'étend depuis l'élément d'étanchéité et peut être reçue dans un évidement (22) ménagé dans une paroi latérale de la gorge pour positionner l'élément d'étanchéité.

12. Assemblage d'étanchéité selon l'une quelconque des revendications précédentes caractérisé en ce que l'élément d'étanchéité n'est pas lubrifié de façon externe.

13. Assemblage d'étanchéité selon l'une quelconque des revendications précédentes, dans lequel la matière plastique dont l'élément d'étanchéité est constitué est moulable et présente une valeur de produit vitesse pression non inférieure à 1800 pour une vitesse de surface de 100 pieds par minute (6,5 x 10⁴ Pa.m.s⁻¹ pour une vitesse de surface de 0,5 m.s⁻¹).

14. Assemblage d'étanchéité selon l'une quelconque des revendications précédentes, dans lequel le premier élément est un arbre ou piston, le second élément comprend un alésage pour recevoir la premier élément et la direction de fonctionnement de l'assemblage d'étanchéité est radiale par rapport à l'axe de l'arbre ou piston.

15. Bague d'appui an élastomère pour pousser légèrement un élément d'étanchéité annulaire selon un contact d'étanchéité avec une surface mobile de façon relative, comprenant un corps annulaire en une seule pièce en élastomère dont la section en coupe présente la forme générale d'un X muni de parties d'angle Incurvées de façon convexe qui fusionnent avec des parties latérales incurvées de façon concave, caractérisée en ce que dans une condition de non soumission à des contraintes de la bague, la distance minimum séparant une paire de surfaces latérales opposées de la bague vaut de 60% à 70% de la distance maximum qui sépare les surfaces latérales opposées.

16. Bague d'appui en élastomère selon la revendication 15, dans laquelle la distance normale minimum séparant les surfaces opposées vaut approximativement 68% de la distance normale maximum séparant les surfaces latérales opposées.

17. Bague d'appui en élastomère selon la revendication 15 ou 16, dans laquelle le rayon de courbure de la partie concave de chacune des surfaces opposées vaut approximativement 17% à 30% de la distance normale maximum séparant les surfaces latérales opposées.

18. Bague d'appui en élastomère selon la revendication 17, dans laquelle le rayon de courbure de la partie concave de chacune des surfaces opposées vaut approximativement 17% à 28% de la distance normale maximum séparant les surfaces latérales opposées.

19. Bague d'appui en élastomère selon l'une quelconque des revendications 15 à 18, dans laquelle le rayon de courbure de chaque partie d'angle convexe vaut environ la moitié du rayon de courbure de la partie concave de chacune des surfaces latérales opposées.

20. Bague d'appui en élastomère selon l'une quelconque des revendications 15 à 19, dans laquelle le rayon de courbure de chaque partie d'angle convexe vaut environ 14% à 16% de la distance normale maximum séparant les surfaces latérales opposées.
